# EUROPEAN PATENT APPLICATION

(11) **EP 2 653 844 A1**
(43) Date of publication of application: **23.10.2013**
(21) Application number: 12164632.7
(22) Date of filing: 18.04.2012
(51) Int. Cl.: G01L 9/00, G01L 9/08

(54) **Integrated piezoelectric sensor for static pressure measurement**

(71) Applicant: Honeywell International Inc., Morristown, NJ 07962-2245 (US)
(72) Inventor: Costea, Stefan Dan, 041444 Bucharest (RO); Dumitru, Viorel Georgel, 100077 Prahova (RO); Avramescu, Viorel, 030342 Bucharest (RO); Gologanu, Mihai, 011905 Bucuresti (RO)
(74) Representative: Houghton, Mark Phillip

(57) **Abstract**

A sensor includes a film bulk acoustic wave resonator (FBAR) (145) integrated with a transistor (105). The FBAR and transistor are configured to determine pressure in the reference cavity (170) by measuring a current flow through the transistor.

## Description

### Technical Field

The present disclosure relates to the measurement of pressure, and in an embodiment, but not by way of limitation, an integrated piezoelectric sensor for the measurement of pressure.

### Background

Pressure sensors are used in many industries and technical fields. To be effective, such sensors should be sensitive and easily integrated with electronics. Additionally, at least in some cases, the sensors need to be able to work at high temperatures and/or in harsh environments. The classical approach of using piezoresistive sensors for detecting pressure has the drawback of the limited sensitivity of such sensors. Another approach involves placing a film bulk acoustic resonator (FBAR) under some amount of exterior mechanical stress such that the resonance frequency of the FBAR changes. This change in resonance frequency is measured, and it is used to determine the mechanical stress (i.e., pressure) that was placed on the FBAR. However, a shortcoming of this approach is that it needs to measure and monitor the frequency of the device.

### Brief Description of the Drawings

**FIG. 1** is a block diagram of an embodiment of a transistor integrated with a film bulk acoustic resonator (FBAR).

**FIG. 2** is a block diagram of another embodiment of a transistor integrated with a film bulk acoustic resonator (FBAR).

**FIG. 3** is a block diagram of a third embodiment of a transistor integrated with a film bulk acoustic resonator (FBAR).

**FIG. 4** is a block diagram of a fourth embodiment of a transistor integrated with a film bulk acoustic resonator (FBAR).

**FIG. 5** is a block diagram of a fifth embodiment of a transistor integrated with a film bulk acoustic resonator.

**FIG 6** is a block diagram of a sixth embodiment of a transistor integrated with a film bulk acoustic resonator (FBAR).

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

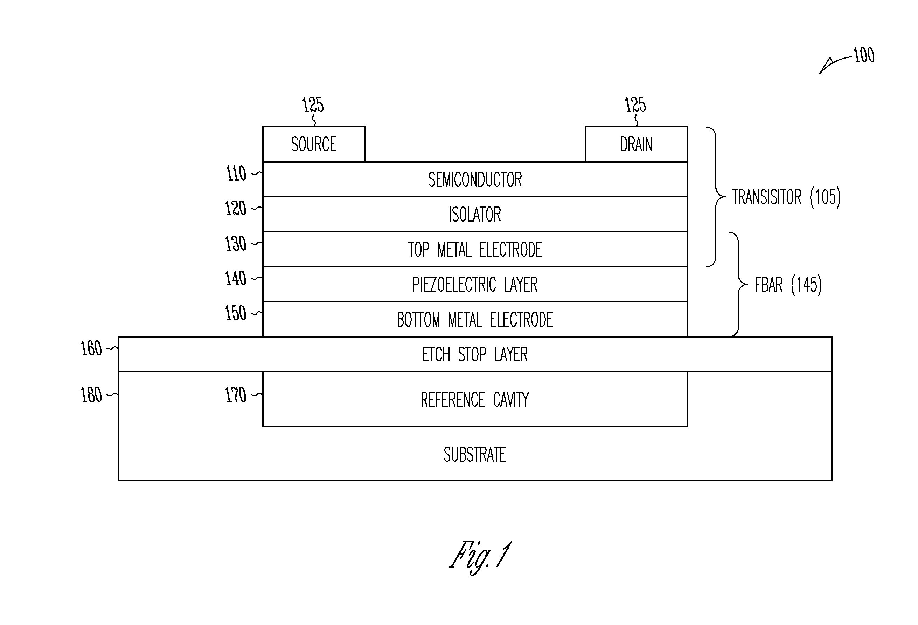

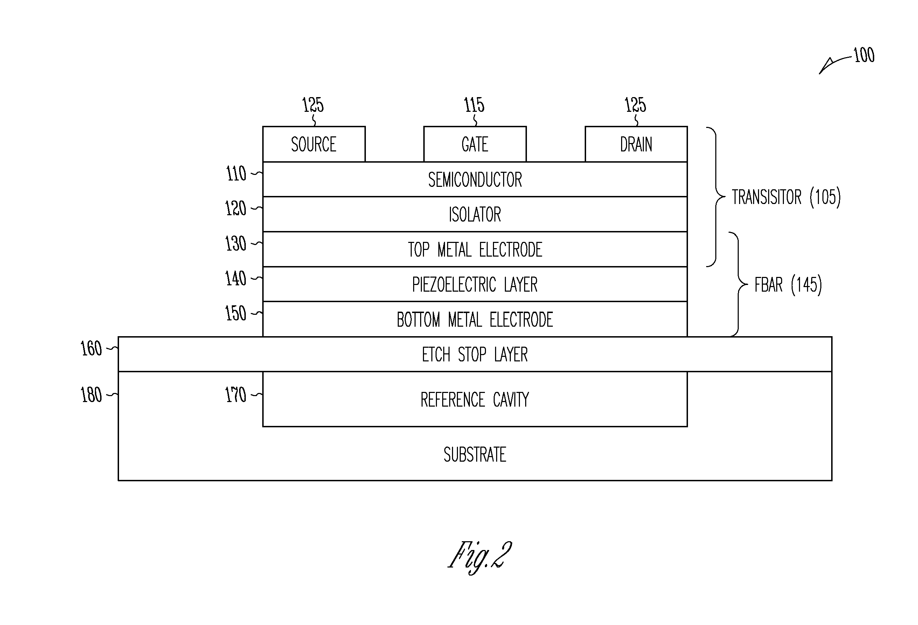

In an embodiment, a transistor is integrated with a film bulk acoustic resonator (FBAR). The integrated transistor/FBAR can be used to measure pressures---both static and dynamic pressures. An embodiment of such an integrated transistor and FBAR **100** is illustrated in **FIG. 1****.** In **FIG. 1****,** a membrane type FBAR **145** includes a thin film piezoelectric layer **140** with a top electrode **130** and a bottom or back electrode **150.** The FBAR **145** is positioned over a reference cavity **170** that is built into a substrate **180.** The FBAR **145** is covered with a thin film transistor **105,** which includes a semiconductor layer **110,** an isolator **120,** source and drain electrodes **125,** and an electrode **130.** As can be seen in **FIG. 1****,** the top metal electrode **130** of the FBAR **145** also acts as the electrode gate **130** for the thin film transistor **105.** The integrated transistor and FBAR can also include an etch stop layer **160.** **FIG. 2** illustrates a similar device as is illustrated in **FIG. 1****,** except that in **FIG. 2** the thin film transistor **105** has a supplementary top-gate **115.** In the embodiment of **FIG. 2****,** the top metal electrode **130** of the FBAR acts as a second gate electrode for the transistor.

The FBAR **145** uses an electric field excitation that is parallel to the thickness of the FBAR to generate waves propagating across its thickness *(i.e.,* a resonant acoustic wave will be generated within the piezoelectric film when an excitation voltage is applied between the electrodes). Then, when the FBAR is placed under some amount of exterior mechanical stress, the resonance frequency of the FBAR will change. Instead of externally measuring this frequency change (as it is done in the prior art), the embodiments of **FIGS. 1** and **2** directly couple the FBAR **145** with a transistor **105.** In these embodiments, the external mechanical stress changes the electric current flowing through the transistor. Then, by placing the integrated FBAR **145** and transistor **105** above a membrane that encloses a reference pressure cavity **170,** a pressure can be measured. When the external pressure changes (by comparison with the reference pressure), the membrane will be put under stress, and thus the resonant frequency of the FBAR **145** and the current flowing through transistor **105** will change.

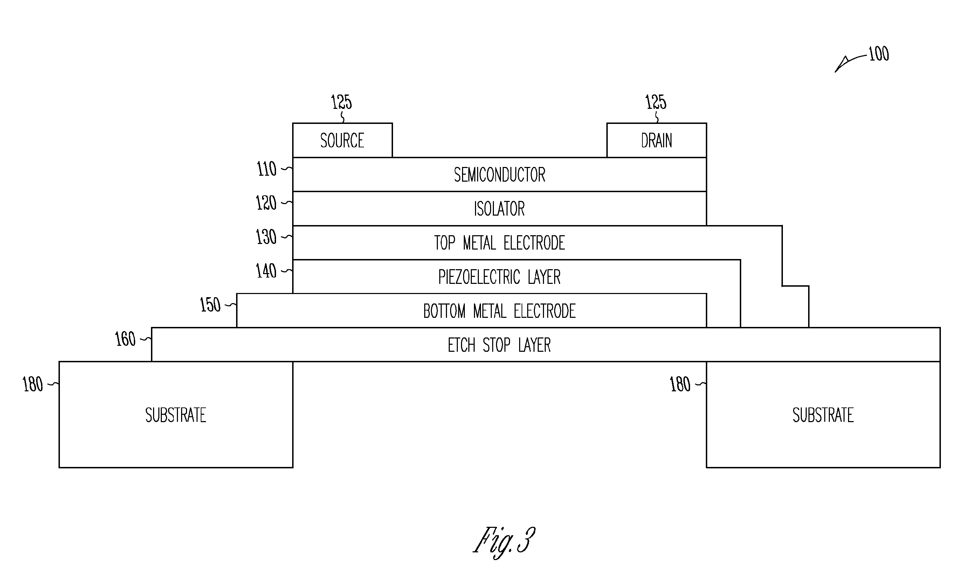

**FIG. 3** illustrates a sensor that is similar to the sensor in **FIG. 1****.** However, the sensor in **FIG. 3** does not include a reference pressure cavity. Instead, the sensor illustrated in **FIG. 3** measures the difference in pressure on the two sides of the sensor, that is, the side adjacent to the semiconductor layer **110** and the side adjacent to the etch stop layer **160.**

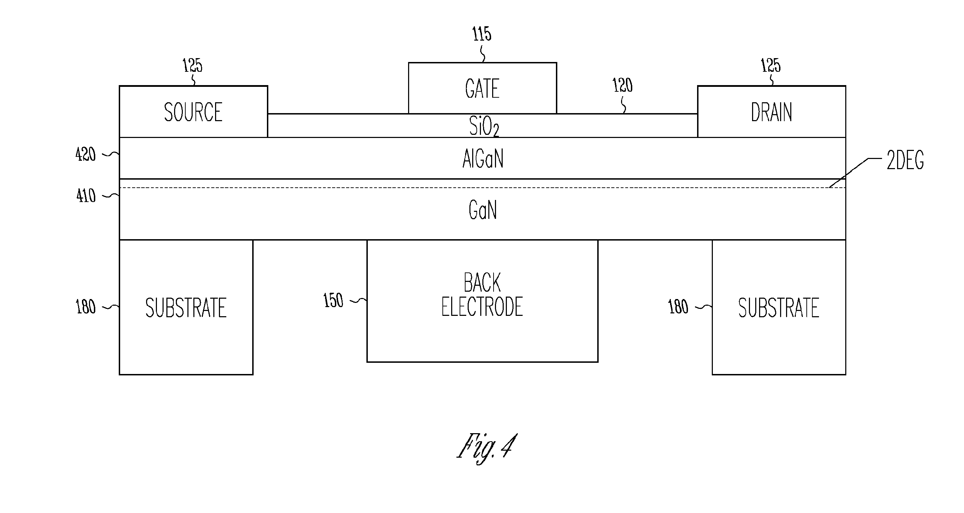

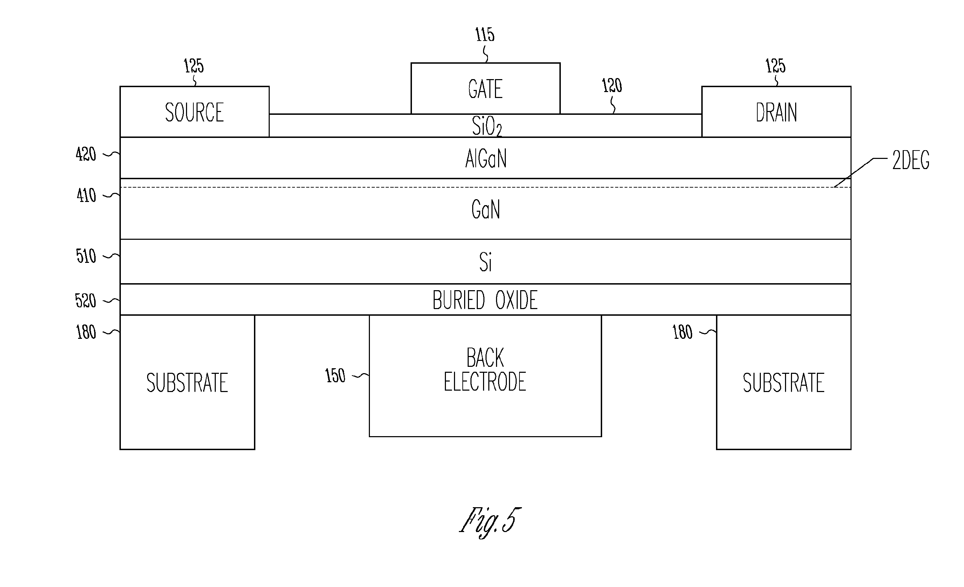

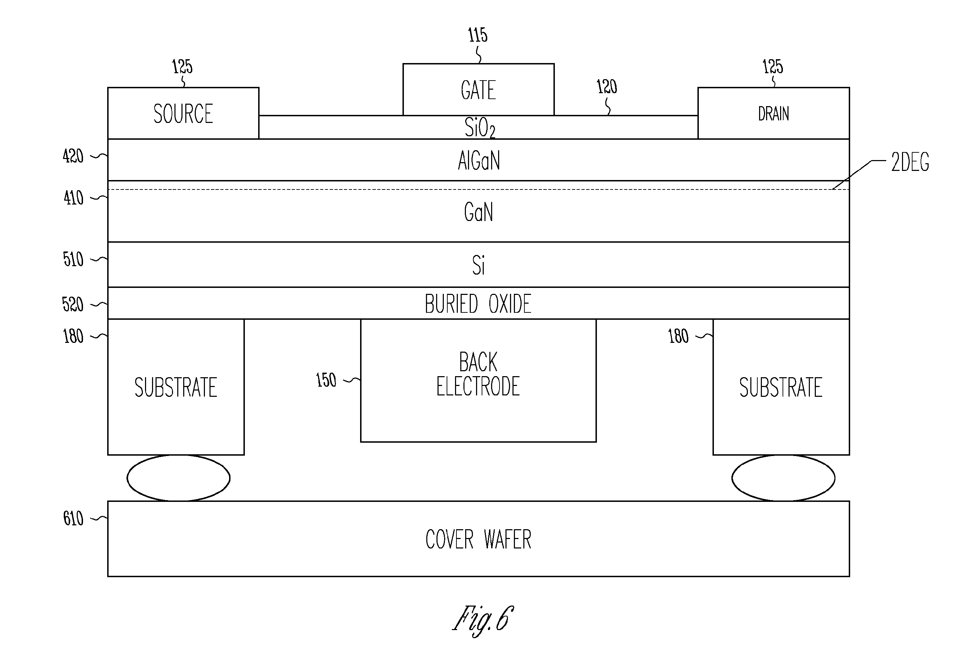

**FIGS. 4****,** **5****,** and **6** illustrate pressure sensors based on an FBAR having incorporated a GaN HEMT transistor. In these embodiments, the FBAR uses as a piezoelectric layer the GaN/A1GaN piezoelectric layers on which the GaN HEMT transistors are typically based. Specifically, in **FIG. 4****,** the GaN layer **410** is placed on the substrate **180.** The A1GaN layer **420** is deposited on the GaN layer **410.** A two dimensional electron gas (2 DEG) layer formed at the interface between the GaN and A1GaN layers acts as the transistor channel. The isolator layer **120** in the example of **FIG. 4** is a SiO₂ layer. In **FIG. 5****,** the GaN layer **410** is deposited on a Si layer **510,** which is on an oxide layer **520.** In the embodiment of **FIG. 6****,** the sensor additionally includes a cover wafer **610.** While in the above embodiments the described GaN HEMT is a GaN/A1GaN based one, it should be understood that any other 111-nitrides (A1N, GaN, InN and their alloys) based HEMT transistors could be employed.

In an embodiment, the FBAR **145** is excited externally by an electric field, and the pressure is detected by monitoring the current flowing through the transistor **105,** such as an HEMT transistor.

GaN-based pressure sensors, including GaN HEMT pressure sensing structures, are known in the art. However, in such prior sensors the pressure sensing is done by monitoring the channel resistivity change in the GaN HEMT transistor induced due to piezoresistive effect. In contrast, in one or more embodiments of the present disclosure, an FBAR device incorporates the HEMT transistor, which makes the device structure and the operation mode different from prior art devices. Also, pressure sensors based on resonant frequency change in a membrane type FBAR are also known in the art. However, in such prior art FBAR sensors, the pressure sensing is done by monitoring the resonant frequency change. Once again, the embodiments of the current disclosure are different since they directly measure the current through the transistor incorporated in the FBAR device.

The devices illustrated in **FIGS. 1****,** **2****,** and **3** could be manufactured by any of the well known methods for fabricating membrane type FBARs followed by any of the well known methods for fabricating thin film transistors. For instance, a Si wafer could be used as a substrate and an oxide, like SiO₂ as stop etch layer. On them, a bottom metal electrode (like Pt/Ti, Pt/Cr or any other metal electrodes typically used in FBAR fabrication) is deposited by thermal evaporation or by any other suitable method. After that, a piezoeletric layer (like highly oriented polycrystalline A1N or ZnO layers) could be deposited by sputtering, followed by the top metal electrode. On this, an isolator layer (like SiO₂ SiNₓ, Al₂O₃, *etc.*) and a semiconductor layer (like InN, AlInN, policrystalline silicon, a-Si:H, InGaZnO, GZO, A1ZnSnO, ZTO, IZO, ZrInZnO, nanowires and nanotubes based layers, or any other semiconductor layer suitable to be used in a thin film transistor) are placed, and the metalizations for source, drain, and (where needed) gate electrodes are deposited by any suitable method.

For patterning the transistor, standard lithographic and etching technologies could be employed or the thin film transistor could be realized by direct printing technology (ink-jet printed thin film transistors are well known). Finally, the reference cavity etching could be done by any known suitable MEMS micromachining technology (for instance by Si wet etching in the case of closed cavity as illustrated in **FIGS. 1** and **2****,** or by wet and/or dry etching in the case of an open cavity as illustrated in **FIG. 3****).** It should be noted that in some approaches, the etch stop layer shown in **FIGS. 1****,** **2****,** and **3** need not be present. In such a case, the bottom metal electrode acts as an etch stop layer.

The sensor depicted in **FIG. 4** is a membrane-type GaN-based FBAR having an incorporated HEMT transistor. Such a device could be manufactured using standard fabrication processes that are employed for GaN HEMT commercial devices, followed by the etching of the substrate to generate the cavity (using any of the methods described in the GaN MEMS literature), and by the deposition of a metallic back electrode. For this structure, the substrate could be the well known Si <111>, SiC, or sapphire wafers that are currently used for fabrication of GaN HEMT transistors, and GaN epitaxial layer is used as the etch stop layer. The structure depicted in **FIG. 5** is similar to the structure illustrated in **FIG. 4****,** except that the substrate is a silicon-on-insulator (SOI) wafer having preferably Si<111> as the top silicon. In such a case, buried oxide is used as the etch stop layer. The sensor depicted in **FIG. 6** is similar to the sensor illustrated in **FIG. 5****,** except that closed cavity is formed by an attached cover wafer. It should be noted that while in **FIGS. 4****,** **5****,** and **6** an A1GaN/GaN HEMT is depicted, any other GaN based HEMT structure known in the art could be employed (like AlInN/GaN or much more complicated GaN HEMT structures).

### Example Embodiments

Several embodiments and sub-embodiments have been disclosed above, and it is envisioned that any embodiment can be combined with any other embodiment or sub-embodiment. Specific examples of such combinations are illustrated in the examples below.

Example No. 1 includes an apparatus comprising a substrate, a reference cavity positioned within the substrate, a film bulk acoustic wave resonator (FBAR) positioned over the reference cavity, and a transistor integrated with the FBAR. The FBAR and transistor are configured to determine pressure in the reference cavity by measuring a current flow through the transistor.

Example No. 2 includes the features of Example No. 1, and optionally includes an etch stop layer positioned between the reference cavity and the FBAR.

Example No. 3 includes the features of Example Nos. 1-2, and optionally includes an apparatus wherein the integration of the transistor with the FBAR comprises an FBAR comprising a first electrode, a piezoelectric layer coupled to the first electrode, and a second electrode coupled to the piezoelectric layer and a transistor comprising the second electrode, an isolator coupled to the second electrode, and a semiconductor material coupled to the isolator.

Example No. 4 includes the features of Example Nos. 1-3, and optionally includes an apparatus wherein the second electrode is configured as a gate for the semiconductor material, and comprising a third electrode coupled to the semiconductor material, the third electrode configured as a second gate for the semiconductor material.

Example No. 5 includes the features of Example Nos. 1-4, and optionally includes an apparatus wherein the pressure includes static pressure.

Example No. 6 includes the features of Example Nos. 1-5, and optionally includes an apparatus wherein the FBAR comprises a piezoelectric layer, and the transistor is integrated into the piezoelectric layer of the FBAR.

Example No. 7 includes the features of Example Nos. 1-6, and optionally includes an apparatus wherein the piezoelectric layer comprises a III-nitrides piezoelectric layer including one or more of GaN, AIN, InN, and alloys of GaN, AIN, and InN, and the transistor comprises a 111-nitrides based HEMT transistor.

Example No. 8 includes an apparatus comprising a transistor integrated with a film bulk acoustic resonator (FBAR), wherein the FBAR and transistor are configured to determine pressure applied to the FBAR and the transistor by measuring a current flow through the transistor.

Example No. 9 includes the features of Example No. 8, and optionally includes an apparatus comprising a reference cavity coupled to the FBAR, wherein the FBAR and transistor are configured to determine the pressure in the reference cavity.

Example No. 10 includes the features of Example Nos. 8-9, and optionally includes an apparatus wherein the transistor and FBAR are integrated via an electrode shared by the transistor and the FBAR.

Example No. 11 includes the features of Example Nos. 8-10, and optionally includes an apparatus wherein the apparatus comprises a first side and a second side, and wherein the apparatus is configured to measure the pressure on the first side and the second side.

Example No. 12 includes the features of Example Nos. 8-11, and optionally includes an apparatus wherein the FBAR comprises a piezoelectric layer, and the transistor is integrated into the piezoelectric layer of the FBAR.

Example No. 13 includes the features of Example Nos. 8-12, and optionally includes an apparatus wherein the piezoelectric layer comprises a III-nitrides piezoelectric layer comprising one or more of GaN, AIN, InN, and alloys of GaN, AIN, and InN, and the transistor comprises a III-nitrides based HEMT transistor.

Example No. 14 includes a method comprising providing a film bulk acoustic wave resonator (FBAR) integrated with a transistor, and determining a pressure applied to the FBAR integrated with the transistor by measuring a current flow through the transistor.

Example No. 15 includes the features of Example No. 14, and optionally includes determining a pressure in a reference cavity positioned within the FBAR integrated with the transistor.

Example No. 16 includes the features of Example Nos. 14-15, and optionally includes a method wherein the FBAR integrated with a transistor comprises an FBAR comprising a first electrode, a piezoelectric layer coupled to the first electrode, and a second electrode coupled to the piezoelectric layer and a transistor comprising the second electrode, an isolator coupled to the second electrode, and a semiconductor material coupled to the isolator.

Example No. 17 includes the features of Example Nos. 14-16, and optionally includes a method wherein the second electrode is configured as a gate for the semiconductor material, and comprising a third electrode coupled to the semiconductor material, the third electrode configured as a second gate for the semiconductor material.

Example No. 18 includes the features of Example Nos. 14-17, and optionally includes determining a static pressure applied to the FBAR integrated with the transistor by measuring a current flow through the transistor.

Example No. 19 includes the features of Example Nos. 14-18, and optionally includes a method wherein the FBAR comprises a piezoelectric layer, and the transistor is integrated into the piezoelectric layer of the FBAR.

Example No. 20 includes the features of Example Nos. 14-19, and optionally includes a method wherein the piezoelectric layer comprises one or more of a 111-nitrides piezoelectric layer comprising one or more of GaN, AIN, InN, and alloys of GaN, AIN, and InN, and the transistor comprises a 111-nitrides based HEMT transistor.

It should be understood that there exist implementations of other variations and modifications of the invention and its various aspects, as may be readily apparent, for example, to those of ordinary skill in the art, and that the invention is not limited by specific embodiments described herein. Features and embodiments described above may be combined with each other in different combinations. It is therefore contemplated to cover any and all modifications, variations, combinations or equivalents that fall within the scope of the present invention.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. An apparatus comprising:
a substrate; (180)
a reference cavity positioned within the substrate; (170)
a film bulk acoustic wave resonator (FBAR) positioned over the reference cavity; (145) and
a transistor integrated with the FBAR; (105)
wherein the FBAR and transistor are configured to determine pressure in the reference cavity by measuring a current flow through the transistor.

2. The apparatus of claim 1, comprising an etch stop layer (160) positioned between the reference cavity and the FBAR.

3. The apparatus of claim 1, wherein the integration of the transistor with the FBAR comprises an FBAR comprising a first electrode (150), a piezoelectric layer (140) coupled to the first electrode, and a second electrode (130) coupled to the piezoelectric layer and a transistor comprising the second electrode (130), an isolator (120) coupled to the second electrode, and a semiconductor material (110) coupled to the isolator.

4. The apparatus of claim 3, wherein the second electrode is configured as a gate for the semiconductor material, and comprising a third electrode (115) coupled to the semiconductor material, the third electrode configured as a second gate for the semiconductor material.

5. The apparatus of claim 1, wherein the FBAR (145) comprises a piezoelectric layer (140), and the transistor (105) is integrated into the piezoelectric layer of the FBAR.

6. An apparatus comprising:
a transistor (105) integrated with a film bulk acoustic resonator (FBAR) (145);
wherein the FBAR and transistor are configured to determine pressure applied to the FBAR and the transistor by measuring a current flow through the transistor.

7. The apparatus of claim 8, comprising a reference cavity (170) coupled to the FBAR, wherein the FBAR and transistor are configured to determine the pressure in the reference cavity.

8. The apparatus of claim 8, wherein the transistor (105) and FBAR (145) are integrated via an electrode (130 shared by the transistor and the FBAR.

9. The apparatus of claim 9, wherein the FBAR comprises a piezoelectric layer (140), and the transistor (105) is integrated into the piezoelectric layer (140) of the FBAR.

10. A method comprising:
providing a film bulk acoustic wave resonator (FBAR) (145) integrated with a transistor; (105) and
determining a pressure applied to the FBAR integrated with the transistor by measuring a current flow through the transistor.
